Europäisches Patentamt

(19) European Patent Office

Office européen des brevets

(11) Publication number: **0 310 165 B1**

(12) **EUROPEAN PATENT SPECIFICATION**

(45) Date of publication of patent specification :
08.05.91 Bulletin 91/19

(51) Int. Cl.⁵ : **C10G 47/02,** C10G 65/10, B01J 21/08, B01J 21/04, B01J 29/16

(21) Application number : 88202015.9

(22) Date of filing : 14.09.88

(54) Process for hydrocracking of a hydrocarbon feedstock.

(30) Priority : 29.09.87 GB 8722839

(43) Date of publication of application :
05.04.89 Bulletin 89/14

(45) Publication of the grant of the patent :
08.05.91 Bulletin 91/19

(84) Designated Contracting States :
BE DE FR GB IT NL SE

(56) References cited :
EP-A- 0 183 283
EP-A- 0 247 678
US-A- 3 536 604
US-A- 4 211 634

(72) Inventor : Esener, Aydin Ali
Badhuisweg 3
NL-1031 CM Amsterdam (NL)
Inventor : Gosselink, Johan Willem
Badhuisweg 3
NL-1031 CM Amsterdam (NL)
Inventor : Maxwell, Ian Ernest
Badhuisweg 3
NL-1031 CM Amsterdam (NL)
Inventor : Stork, Willem Hartman Jurriaan
Badhuisweg 3
NL-1031 CM Amsterdam (NL)

(74) Representative : Aalbers, Onno et al
P.O. Box 302
NL-2501 CH The Hague (NL)

(73) Proprietor : SHELL INTERNATIONALE
RESEARCH MAATSCHAPPIJ B.V.
Carel van Bylandtlaan 30
NL-2596 HR Den Haag (NL)

## Description

The present invention relates to a process for the hydrocracking of a hydrocarbon into products of lower average boiling point by contacting the feedstock with hydrogen over a series of beds of catalysts.

It is known to subject a heavy hydrocarbon feedstock to a hydrocracking process which makes use of more than one bed of catalyst. US-A-4,211,634 describes a hydrocracking process by contacting a hydrocarbon feedstock with hydrogen over a first zeolitic catalyst comprising nickel and tungsten or nickel and molybdenum, and contacting the resulting hydrocracked product with hydrogen over a second zeolitic catalyst containing cobalt and molybdenum. In EP-A-0,183,283 a hydrotreating process is described in which a residual oil is passed together with hydrogen over a stacked-bed catalyst, wherein said stacked-bed comprises an upper zone containing an amorphous cracking catalyst with a compound of a Group VIB and Group VIII metal and a phosphorus compound, and a lower zone containing a different amorphous cracking catalyst with a compound of a Group VIB and VIII metal and substantially no phosphorus compound.

From US-A-4,435,275 it is known to hydrocrack a hydrocarbon feedstock using relatively mild conditions by passing the feedstock over a bed of an amorphous hydrotreating catalyst and without intermediate separation or liquid recycle passing the hydrotreated feedstock over a zeolitic hydrocracking catalyst. The zeolite in the hydrocracking catalyst can be selected from zeolite X, zeolite Y or mordenite.

The products of lower average boiling point obtained by hydrocracking include gaseous material, i.e. in general $C_{1-4}$ hydrocarbons, naphtha and a middle distillate fraction, i.e. a kerosine fraction and a gas oil fraction. It is evident that the cut between hydrocracked products may be made at various boiling points.

Since the gaseous products are not very much wanted and since there is an increasing demand for middle distillates, it would be advantageous to have a hydrocracking process available that shows an improved selectivity towards middle distillates and a reduced selectivity towards gaseous products.

It has now surprisingly been found that an increased selectivity towards middle distillates can be obtained if in a hydrocracking process both an amorphous catalyst and a zeolitic catalyst are used in which zeolitic catalyst the zeolite is a zeolite Y with a small unit cell size.

Accordingly the present invention provides a process for the hydrocracking of a hydrocarbon feedstock to products with a lower boiling point comprising contacting said feedstock in the presence of hydrogen and at elevated temperature and pressure with a first amorphous hydrocracking catalyst which contains at least one metal of Group VIB and/or at least one metal of Group VIII on an amorphous carrier in a first reaction zone passing the complete effluent from the first reaction zone to a second reaction zone and contacting in the second reaction zone said effluent from the first reaction in the presence of hydrogen at elevated temperature and pressure with a second, zeolitic hydrocracking catalyst which contains at least one metal of Group VIB and/or at least one metal of Group VIII on a zeolite Y, which zeolite has a unit cell size of below 24.40 Å.

It is evident that the first reaction zone may comprise one or more beds of the first amorphous hydrocracking catalyst and also the second zone may contain one or more beds of the second zeolitic catalyst. It is also evident that the first and second reaction zone or zones may be located in one or more reactors.

The volume ratio of the first amorphous catalyst to the second zeolitic catalyst can be selected within wide ranges. Preferably such a ratio ranges from 9 : 1 to 1 : 5, more preferably from 5 : 1 to 1 : 2.

Hydrocarbon feedstocks which can be used in the present process include gas oils, vacuum gas oil, deasphalted oils, long residues, short residues, catalytically cracked cycle oils, thermally cracked gas oils, and syncrudes, optionally originating from tar sands, shale oils, residue upgrading processes or biomass. Combinations of various hydrocarbon oils can also be employed. The hydrocarbon feedstock will generally be such that a majority, say at least 50%, has a boiling point above 370°C. Nitrogen or sulphur contents in the hydrocarbon feedstock are not critical. Typical nitrogen contents are in the range up to 5000 ppmw, and common sulphur contents are from 0.2 to 6% by weight. It is possible and may be sometimes desirable to subject part or all of the feedstock to a pretreatment. Suitable pretreatments include a (hydro) desulphurization, (hydro) denitrogenation and (hydro) demetallization treatment. An especially convenient process includes a hydrodemetallizing step, in which step part or all of a crude feedstock is hydrodemetallized before being hydrocracked, by contacting said crude feedstock in the presence of hydrogen with a hydrodemetallization catalyst. Any suitable hydrodemetallization catalyst can be used in this process. Catalysts which can be used are catalysts containing nickel and/or vanadium and/or molybdenum on silica. Examples of this kind of catalysts can be found in British patent specification No. 1,522,524. Preferably, the hydrocarbon feedstock to be hydrocracked comprises the effluent of the hydrodemetallization of a crude feedstock which effluent is passed to the first reaction zone without intermediate separation.

The first amorphous hydrocracking catalyst comprises at least one Group VIB metal and/or at least one Group VIII metal on an amorphous carrier. Preferably, the first catalyst comprises at least one Group VIB metal and at least one Group VIII metal. The amorphous hydrocracking catalyst suitably contains molybdenum and/or

2

tungsten and nickel and/or cobalt. The carrier can be selected from alumina, silica, silica-alumina, titania, zirconia, magnesia, clays or mixtures thereof. Preferably, the carrier is alumina. The catalyst is preferably presulphided to convert the metals which are usually in the oxidic form, into the sulphided form. The amorphous catalyst advantageously further contains phosphorus. Conveniently, this catalyst is free of fluorine.

The amounts of the various components in the first amorphous catalyst are not critical and may vary within wide ranges. Conveniently the amorphous catalyst contains from 6 to 24 pbw of a Group VIB metal, from 1 to 16 pbw of a Group VIII metal and from 0 to 12 pbw of phosphorus per 100 pbw of amorphous carrier.

The process conditions in the first reaction zone may vary widely and are not restricted to the relatively mild conditions that are prescribed in US-A-4,435,275.

The reactions in both the first and the second reaction zone are carried out in the presence of hydrogen gas. It is evident that the gas needs not to consist of pure hydrogen, but that it may contain other gases, such as a small amount of hydrogen sulphide, though also pure hydrogen can be used.

Suitable reaction conditions in the first reaction zone are a temperature from 250 to 500°C, a hydrogen (partial) pressure from 20 to 200 bar, a space velocity from 0.1 to 10 kg feedstock/l, catalyst.h, and a $H_2$/feedstock ratio of 100 to 5000 Nl/kg.

The zeolitic catalyst in the second reaction zone comprises a zeolite Y with a unit cell size of below 24.40 Å. Preferably the zeolite Y has a unit cell size below 24.35 Å, a degree of crystallinity which is at least retained at increasing $SiO_2/Al_2O_3$ molar ratios, a water adsorption capacity (at 25°C and a $p/p_o$ value of 0.2) of at least 8% by weight of zeolite and a pore volume of at least 0.25 ml/g wherein between 10% and 60% of the total pore volume is made up of pores having a diameter of at least 8 nm ($p/p_o$ stands for the ratio of the partial water pressure in the apparatus in which the water adsorption capacity is determined and the saturation pressure of water at 25°C).

Preferably catalysts are used wherein between 10% and 40% of the total pore volume of the zeolite Y is made up of pores having a diameter of at least 8 nm. The pore diameter distribution is determined by the method described by E.P. Barrett, G. Joyner and P.P. Halenda (J. Am. Chem. Soc. 73, 373 (1951)) and is based on the numerical analysis of the nitrogen desorption isotherm. It should be noted that inter-crystalline voids are excluded in the determination of the percentage of the total pore volume made up in pores having a diameter of at least 8 nm when said percentage is between 10% and 40%.

It has been found that very good results in terms of performance and activity can be obtained when a zeolite Y is used having a water adsorption capacity of at least 10% by weight on zeolite, in particular between 10% and 15% by weight of zeolite. The water adsorption capacity of the zeolites Y present in the catalysts is measured at 25°C and a $p/p_o$ value of 0.2. In order to determine the water adsorption capacity the zeolite Y is evacuated at elevated temperature, suitably 400°C, and subsequently subjected at 25°C to a water pressure corresponding to a $p/p_o$ value of 0.2.

The unit cell size of the zeolites Y present in the zeolitic catalyst is below 24.40 Å (as determined by ASTM-D-3402, the zeolite being present in its $NH_4^+$-form) and preferably below 24.35 Å. The unit cell size that is regarded as the minimum amounts to 24.19 Å.

As regards crystallinity it should be noted that the preferred zeolites Y should at least retain their crystallinity (relative to a certain standard, e.g. Na-Y) when comparing crystallinity as a function of increasing $SiO_2/Al_2O_3$ molar ratio. Generally, the crystallinity will slightly improve when comparing zeolites Y with increasing $SiO_2/Al_2O_3$ molar ratios.

Preferably the second zeolite hydrocracking catalyst further comprises a refractory oxide as binder.

The binder(s) present in the zeolite catalyst suitably comprise(s) inorganic oxides or mixtures of inorganic oxides. Both amorphous and crystalline binders can be applied. Examples of suitable binders comprise silica, alumina, silica-alumina, clays, zirconia, silica-zirconia and silica-boria. Preference is given to the use of alumina as binder.

The zeolitic catalyst may further comprise a refractory oxide as amorphous cracking component. Suitably, silica-based amorphous cracking components can be used in the zeolitic hydrocracking catalyst. Preference is given to the use of silica-alumina as amorphous cracking component. The amount of silica in silica-based cracking components suitably comprises 50-95% by weight. Also so-called X-ray amorphous zeolites (i.e. zeolites having crystallite sizes too small to be detected by standard X-ray techniques) can be suitably applied as cracking components in the process according to the present invention.

The process according to the present invention is suitably carried out by using a zeolitic catalyst wherein the amount of zeolite Y ranges from 5 to 95% of the combined amount of zeolite Y and refractory oxide, whereby the refractory oxide may comprise the binder and/or the amorphous cracking component. In particular, the process according to the present invention is carried out by using a catalyst wherein the amount of zeolite Y ranges from 10 to 75% of the combined amount of zeolite Y and refractory oxide.

Depending on the desired unit cell size the $SiO_2/Al_2O_3$ molar ratio of the zeolite Y will have to be adjusted. There are many techniques described in the art which can be applied to adjust the unit cell size accordingly. It has been found that zeolites Y having a $SiO_2/Al_2O_3$ molar ratio between 4 and 50 can be suitably applied as the zeolitic component of the catalyst compositions according to the present invention. Preference is given to zeolites Y having a molar $SiO_2/Al_2O_3$ ratio between 8 and 15.

Suitably, the zeolitic catalyst compositions to be used in the second reaction zone of the process according to the present invention comprise one or more components of nickel and/or cobalt and one or more components of molybdenum and/or tungsten or one or more components of platinum and/or palladium.

The amount(s) of hydrogenation component(s) in the catalyst compositions suitably range(s) between 0.05 and 10 parts by weight of the preferred Group VIII metal component(s), i.e. nickel, cobalt, platinum and/or palladium, and/or between 2 and 40 parts by weight of the preferred Group VI metal component(s), i.e. tungsten and/or molybdenum, calculated as metal(s) per 100 parts by weight of total catalyst. The hydrogenation components in the catalyst compositions may be in the oxidic and/or the sulphided form, the sulphided form being preferred. If a combination of at least one Group VI and one Group VIII metal component is present as (mixed) oxides, it may suitably be subjected to a sulphiding treatment prior to proper use in hydrocracking.

The process conditions in the second reaction zone may be substantially the same as those applied in the first reaction zone, but may also be different, e.g. by adjusting the temperature, the catalyst bed volume and the like. Suitable process conditions to be applied in the second reaction zone comprise temperatures in the range of from 250°C to 500°C, pressures up to 300 bar and space velocities between 0.1 and 10 kg feed per litre of catalyst per hour (kg/l.h). $H_2$/feed ratios between 100 and 5000 Nl/kg feed can suitably be used.

Preferably, the process according to the present invention is carried out at a temperature between 300°C and 450°C, a pressure between 25 and 200 bar and a space velocity between 0.2 and 5 kg feed per litre of catalyst per hour. Preferably, $H_2$/feed ratios between 250 and 2000 are applied.

The invention will be illustrated by means of the following Example.

## EXAMPLE I

A number of catalyst systems were subjected to a hydrocracking experiment. Catalysts A and B were prepared as described in EP-A-0247679 and 0247678, using a zeolite Y with a unit cell size of below 2.440 nm, a water adsorption capacity (at 25°C and a $p/p_o$ value of 0.2) of about 11%w, and a nitrogen pore volume of about 0.4 ml/g wherein approximately 18% of the total pore volume is made up of pores having a diameter $\geqq$ 8 nm. Catalyst C contained a zeolite Y with a unit cell size above 2.440 nm. Catalyst D was a commercially availabe nickel-molybdenum-phosphorus on alumina catalyst (ex Shell International Chemical Company), comprising 13.0%w Mo, 3.0%w Ni and 3.2%w P, based on total catalyst.

In the experiments a vacuum gas oil was hydrocracked by contacting the vacuum gas oil in a first reaction zone with a bed of catalyst D and passing the complete effluent from the first reaction zone over a bed containing one of the catalysts A, B and C described above in a second reaction zone. Over the bed of catalyst D and the bed of the zeolitic catalyst (volume ratio 2 : 1) the same temperature was applied. The hydrogen pressure was 59 bar and the space velocity 0.8 kg/l.h. The temperature was adjusted to get a 20 or 30% conversion of the $370^+$°C fraction in the process. Some catalyst characteristics, the temperature required to get the desired conversion and the middle distillate selectivity ($S_{MD}$) obtained, are indicated in Table I. The selectivity towards the middle distillate (MD) fraction (boiling between 180-370°C) ($S_{MD}$) was determined from the formula :

$$S_{MD} = \frac{(MD)_{product} - (MD)_{feed}}{(370\ {}^{o}C^{+})_{feed} - (370\ {}^{o}C^{+})_{product}} \cdot 100\%$$

TABLE I

| Experiment No. | 1 | 2 | 3 |
|---|---|---|---|
| Catalyst | A | B | C |
| | | | |
| Ni, %w | 2.6 | 2.6 | 2.3 |
| Mo, %w | 4.3 | 4.3 | -- |
| W, %w | -- | -- | 7.7 |
| | | | |
| Carrier | | | |
| alumina, %w | 20 | 30 | 25 |
| silica-alumina, %w | -- | 30 | -- |
| zeolite Y, %w | 80 | 40 | 75 |
| | | | |
| Zeolite Y | | | |
| unit cell size, nm | 2.432 | 2.432 | 2.451 |
| | | | |
| Conversion, 20% | | | |
| $T_{required}$, °C | 385 | 385 | 386 |
| $S_{MD}$, % | 65 | 71 | 60 |
| | | | |
| Conversion, 30% | | | |
| $T_{required}$, °C | 393 | 396 | 395 |
| $S_{MD}$, % | 64 | 64 | 57 |

EXAMPLE II

A number of catalyst systems were subjected to a hydrocracking experiment.

Catalyst E was prepared starting from a zeolite Y as described in European patent application No. 0247679, having a unit cell size below 2.440 nm.

Catalyst F was a commercially available zeolitic catalyst, containing a zeolite Y with a unit cell size above 2.440 nm.

Catalyst G was a commercially available nickel-molybdenum phosphorus on alumina catalyst.

Some catalyst characteristics are indicated in Table II.

In the experiments a vacuum gas oil was hydrocracked by contacting the vacuum gas oil in a first reaction zone with a bed of catalyst G and passing the complete effluent from the first reaction zone over a bed containing one of the catalysts E, F and G described above. The vacuum gas oil had a nitrogen content of 820 ppm and a sulphur content of 2.91%w. Boiling characteristics of the vacuum gas oil were as follows : an IBP of 359°C, 50%w recovered at 469°C and 70%w recovered at 507°C.

In experiments 4 and 5 the catalyst volume ratio of catalyst G to zeolitic catalyst was 7 : 3. The total pressure was 120 bar and the space velocity was 1.0 kg/l.h. The temperature was adjusted to get a 70% conversion of the $370^{+}$°C fraction in the process.

The temperature required to get the desired conversion and some characteristics of the obtained product are indicated in Table III.

## TABLE II

| Catalyst | E | F | G |
|---|---|---|---|
| Ni, %w | 2.6 | 2.6 | 2.7 |
| Mo, %w | -- | -- | 13.2 |
| W, %w | 8.2 | 8.2 | -- |
| P, %w | -- | -- | 2.9 |
| Carrier | | | |
| alumina, %w | 20 | 20 | 100 |
| zeolite Y, %w | 80 | 80 | -- |
| Zeolite Y | | | |
| unit cell size, nm | 2.430 | 2.452 | -- |

## TABLE III

| | | |
|---|---|---|
| Experiment No. | 4 | 5 |
| Catalyst in first reaction zone | G | G |
| Catalyst in second reaction zone | E | F |
| Product obtained | | |
| $C_{1-4}$ | 4 | 5 |
| $C_5$-180 °C | 45 | 56 |
| 180-250 °C | 25 | 20 |
| 250-370 °C | 26 | 19 |
| Activity | | |
| $T_{req}$ (°C) | 365 | 363 |

From the above results it is apparent that the experiment according to the present invention yields more middle distillates, i.e. 180-250°C (kerosine) fraction and 250-370°C (gas oil) fraction, than the experiment which is not according to the invention.

## Claims

1. Process for the hydrocracking of a hydrocarbon feedstock to products with a lower boiling point comprising contacting said feedstock in the presence of hydrogen and at elevated temperature and pressure with a first amorphous hydrocracking catalyst which contains at least one metal of Group VIB and/or at least one metal of Group VIII on an amorphous carrier in a first reaction zone passing the complete effluent from the first reaction zone to a second reaction zone and contacting in the second reaction zone said effluent from the first reaction in the presence of hydrogen at elevated temperature and pressure with a second, zeolitic hydrocracking catalyst which contains at least one metal of Group VIB and/or at least one metal of Group VIII on a zeolite Y, which zeolite has a unit cell size of below 24.40 Å.

2. Process according to claim 1, in which the hydrocarbon feedstock to be hydrocracked comprises the effluent of the hydrodemetallization of a crude feedstock, which effluent is passed to the first reaction zone without intermediate separation.

3. Process according to claim 2, in which the hydrodemetallization catalyst contains nickel and/or vanadium and/or molybdenum on silica.

4. Process according to any one of claims 1-3, in which the amorphous hydrocracking catalyst contains nickel and/or cobalt and molybdenum and/or tungsten.

5. Process according to any one of claims 1-4, in which the amorphous carrier is alumina.

6. Process according to any one of claims 1-5, in which the reaction conditions in the first reaction zone are : a temperature from 250 to 500°C, a hydrogen (partial) pressure from 20 to 200 bar, a space velocity from 0.1 to 10 kg/l.h and a $H_2$/feedstock ratio of 100 to 5000 Nl/kg.

7. A process according to any one of claims 1-6, wherein the zeolite Y has a unit cell size below 24.35 Å.

8. A process according to any one of claims 1-7, wherein the faujasite-type zeolite is a zeolite Y having a $SiO_2/Al_2O_3$ molar ratio of from 8 to 15.

9. A process according to any one of claims 1-8, wherein the zeolitic hydrocracking catalyst comprises one or more components of nickel and/or cobalt and one or more components of molybdenum and/or tungsten or one or more components of platinum and/or palladium.

10. A process according to any one of claims 1-9, wherein the reaction in the second reaction zone is carried out at a temperature in the range of from 250°C to 500°C, a pressure up to 300 bar and a space velocity between 0.1 and 10 kg feed per litre of catalyst per hour.


## Ansprüche

1. Verfahren zum Hydrocracken von Kohlenwasserstoffeinsatzmaterial in Produkte mit einem niedrigeren Siedepunkt, umfassend das Kontaktieren des genannten Einsatzmaterials in Gegenwart von Wasserstoff und bei erhöhter Temperatur und erhöhtem Druck mit einem ersten amorphen Hydrocrackkatalysator, welcher mindestens ein Metall der Gruppe VIB und/oder mindestens ein Metall der Gruppe VIII auf einem amorphen Träger in einer ersten Reaktionszone enthält, das Leiten des gesamten Abstroms aus der ersten Reaktionszone in eine zweite Reaktionszone, und das Kontaktieren des genannten Abstroms aus der ersten Reaktionszone in der zweiten Reaktionszone in Gegenwart von Wasserstoff bei erhöhter Temperatur und erhöhtem Druck mit einem zweiten, zeolithhaltigen Katalysator, welcher mindestens ein Metall der Gruppe VIB und/oder mindestens ein Metall der Gruppe VIII auf einem Zeolith Y enthält, welcher Zeolith eine Elementarzellengröße von weniger als 24,40 Å aufweist.

2. Verfahren nach Anspruch 1, in welchem das Kohlenwasserstoffeinsatzmaterial, das dem Hydrocrackverfahren unterworfen werden soll, den Abstrom aus der Hydroentmetallisierung eines Roheinsatzmaterials umfaßt, welcher Abstrom ohne dazwischen stattfindendes Auftrennen zur ersten Reaktionszone geleitet wird.

3. Verfahren nach Anspruch 2, in welchem der Hydroentmetallisierungskatalysator Nickel und/oder Vanadium und/oder Molybdän auf Siliciumdioxid enthält.

4. Verfahren nach einem der Ansprüche 1 bis 3, in welchem der amorphe Hydrocrackkatalysator Nickel und/oder Kobalt und Molybdän und/oder Wolfram enthält.

5. Verfahren nach einem der Ansprüche 1 bis 4, in welchem der amorphe Träger Aluminiumoxid ist.

6. Verfahren nach einem der Ansprüche 1 bis 5, in welchem die Reaktionsbedingungen in der ersten Reaktionszone wie folgt sind : eine Temperatur von 250 bis 500°C, ein Wasserstoff (partial) druck von 20 bis 200 bar, eine Raumgeschwindigkeit von 0,1 bis 10 kg/l.h und ein Verhältnis von $H_2$/Einsatzmaterial von 100 bis 5000 Nl/kg.

7. Ein Verfahren nach einem der Ansprüche 1 bis 6, in welchem der Zeolith Y eine Elementarzellengröße von weniger als 24.35 Å aufweist.

8. Ein Verfahren nach einem der Ansprüche 1 bis 7, in welchem der Zeolith vom Faujasit-Typ ein Zeolith Y mit einem SiO$_2$/Al$_2$O$_3$-Molverhältnis von 8 : 1 bis 15 : 1 ist.

9. Ein Verfahren nach einem der Ansprüche 1 bis 8, in welchem der zeolithhaltige Hydrocrackkatalysator eine oder mehrere Komponenten von Nickel und/oder Kobalt und eine oder mehrere Komponenten von Molybdän und/oder Wolfram oder eine oder mehrere Komponenten von Platin und/oder Palladium enthält.

10. Ein Verfahren nach einem der Ansprüche 1 bis 9, in welchem die Reaktion in der zweiten Reaktionszone bei einer Temperatur im Bereich von 250 bis 500°C, einem Druck bis zu 300 bar und einer Raumgeschwindigkeit zwischen 0,1 und 10 kg Zuspeisung pro Liter Katalysator pro Stunde durchgeführt wird.

## Revendications

1. Procédé pour l'hydrocraquage d'une charge de départ hydrocarbonée en produits d'un plus bas point d'ébullition comprenant la mise en contact de cette charge de départ en présence d'hydrogène et à température et pression élevées avec un premier catalyseur d'hydrocraquage amorphe qui contient au moins un métal du groupe VIB et/ou au moins un métal du groupe VIII sur un support amorphe dans une première zone de réaction, le passage de l'effluent complet de la première zone de réaction à une deuxième zone de réaction et la mise en contact dans la deuxième zone de réaction de l'effluent de la première réaction en présence d'hydrogène à température et pression élevées avec un deuxième catalyseur d'hydrocraquage zéolitique qui contient au moins un métal du groupe VIB et/ou au moins un métal du groupe VIII sur une zéolite Y, cette zéolite ayant une dimension de maille unitaire inférieure à 24,40 Å.

2. Procédé selon la revendication 1, dans lequel la charge de départ à hydrocraquer comprend l'effluent de l'hydrodémétallisation d'une charge de départ brute, lequel effluent est passé à la première zone de réaction sans séparation intermédiaire.

3. Procédé selon la revendication 2, dans lequel le catalyseur d'hydrodémétallisation contient du nickel et/ou du vanadium et/ou du molybdène sur de la silice.

4. Procédé selon l'une quelconque des revendications 1-3, dans lequel le catalyseur d'hydrocraquage amorphe contient du nickel et/ou du cobalt et du molybdène et/ou du tungstène.

5. Procédé selon l'une quelconque des revendications 1-4, dans lequel le support amorphe est de l'alumine.

6. Procédé selon l'une quelconque des revendications 1-5, dans lequel les conditions de réaction dans la première zone de réaction sont : une température comprise entre 250 et 500°C, une pression (partielle) d'hydrogène comprise entre 20 et 200 bars, une vitesse spatiale comprise entre 0,1 et 10 kg/h et un rappport H$_2$/charge de départ compris entre 100 et 5000 Nl/kg.

7. Procédé selon l'une quelconque des revendications 1-6, dans lequel la zéolite Y a une dimension de maille unitaire inférieure à 24,35 Å.

8. Procédé selon l'une quelconque des revendications 1-7, dans lequel la zéolite du type faujasite est une zéolite Y ayant un rapport molaire SiO$_2$/Al$_2$O$_3$ compris entre 8 et 15.

9. Procédé selon l'une quelconque des revendications 1-8, dans lequel le catalyseur d'hydrocraquage zéolitique comprend un ou plusieurs constituants à base de nickel et/ou de cobalt et un ou plusieurs constituants à base de molybdène et/ou de tungstène ou un ou plusieurs constituants à base de platine et/ou de palladium.

10. Procédé selon l'une quelconque des revendications 1-9, dans lequel le réaction dans la deuxième zone de réaction est conduite à une température comprise entre 250°C et 500°C, une pression allant jusqu'à 300 bars et une vitesse spatiale comprise entre 0,1 et 10 kg de charge par litre de catalyseur et par heure.